# EUROPEAN PATENT SPECIFICATION

(11) **EP 3 002 168 B1**
(45) Date of publication and mention of the grant of the patent: **16.12.2020**
(21) Application number: 14306554.8
(22) Date of filing: 02.10.2014
(51) Int. Cl.: B60S 1/52

(54) **WIPER BLADE DEVICE AND WIPER DEVICE FOR CONNECTING A WIPER BLADE TO A WIPER ARM OF A VEHICLE**
WISCHERBLATTVORRICHTUNG UND WISCHERVORRICHTUNG ZUR BEFESTIGUNG EINES WISCHERBLATTS AN EINEN WISCHERARM EINES FAHRZEUGS
DISPOSITIF DE LAME D'ESSUIE-GLACE ET DISPOSITIF ESSUIE-GLACE POUR RELIER UNE RACLETTE D'ESSUIE-GLACE À UN BRAS D'ESSUIE-GLACE D'UN VÉHICULE

(43) Date of publication of application: 06.04.2016
(73) Proprietor: Valeo Systèmes d'Essuyage, 78322 Le Mesnil Saint Denis (FR)
(72) Inventor: Grasso, Giuseppe, 63340 Le Breuil sur Couze (FR); Schaeuble, Michael, 71665 Vaihingen/Enz (DE); Thebault, Denis, 63000 Clermont Ferrand (FR)
(74) Representative: Valeo Vision

(56) References cited:
- EP-A2- 1 099 609
- DE-A1- 3 639 537
- DE-A1-102005 060 617
- DE-A1-102010 049 740
- DE-A1-102013 208 576
- FR-A1- 2 902 063
- JP-U- S5 495 739

## Description

The invention relates to a wiper blade device for a wiper device for connecting a wiper blade to a wiper arm of a vehicle. The invention further relates to a wiper device.

A wiper device for connecting a wiper blade with a wiper arm comprising a wiper blade adapter having an adapter element on the wiper arm side and an adapter element on the wiper blade side, which are arranged pivotably with respect to each other in a rotation axis is known from prior art (see for instance documents DE 10 2010 049740 A1 and DE 102005060617). This allows having a high rotation amplitude of the wiper blade with respect to the wiper arm.

The wiper blade is made of two wiper blade sections, each having spray ducts constructed inside, which are connected to the wiper blade adapter. The wiper blade adapter is connected to a supply line for the washing fluid which is guided along the wiper arm on the vehicle side.

One aim of the present invention is to provide a wiper blade device with a washing fluid spraying function for a wiper blade which has no internal spray ducts in a compact assembly.

This object is achieved by a wiper blade device for connecting a wiper blade to a wiper arm of a vehicle, comprising an adapter configured to be connected to a wiper arm and a blade connector configured to be connected to a wiper blade, said adapter and blade connector being arranged pivotably with respect to each other in a rotation axis destined to be perpendicular to the longitudinal direction of the wiper blade, wherein a fluid channel is arranged into the adapter, the fluid channel having an inlet destined to be plugged-in a water hose and ending by at least one spray nozzle enabling the spraying of a washing fluid, wherein the fluid channel comprises an intermediate fluid portion which extends in a direction parallel to the rotation axis, and wherein the adapter is configured to cooperate with complementary connecting elements of the wiper arm device to connect the wiper arm device with the wiper blade device after two movements of the wiper blade device perpendicularly with respect to each other.

Thus, the wiper blade device allows connecting the wiper blade to the wiper arm and allows providing a spraying function. The spraying function inserted in the adapter is thus well integrated near the rotation axis. This allows providing a compact wiper device while spraying the washing fluid directly on the surface that is swept by the wiper blade.

The wiper blade device may further comprise one or more features hereafter, taking alone or in combination:
- the rotation axis comprises a pivot pin around which the adapter and the blade connector are arranged pivotably,
- the at least one spray nozzle is arranged on a protrusion of the adapter, arranged on the side wall of a main body of the adapter,
- the fluid channel comprises an intermediate fluid portion which extends in a direction aligned with the rotation axis,
- the wiper blade device comprises a closure element inserted between the fluid channel and the pivot pin,
- the fluid channel comprises an intermediate fluid portion which is arranged between the rotation axis and a front cover of the adapter,
- the at least one spray nozzle is arranged in the front cover,
- the fluid channel comprises an inlet fluid portion communicating between the inlet and the intermediate fluid portion which is destined to be arranged in parallel with the longitudinal direction of the wiper blade,
- the complementary connecting elements of the wiper arm device comprise at least two connecting lugs arranged on each side wall of the wiper arm device,
- the adapter comprises complementary slots or boundaries extending perpendicularly to the longitudinal direction, and notches extending in the longitudinal direction at an end of the slots or boundaries, the connecting lugs being able to cooperate with the complementary slots or boundaries and notches to connect the wiper arm device with the wiper blade device after two movements of the wiper blade device perpendicularly with respect to each other.

Another object of the present invention is a wiper device for connecting a wiper blade to a wiper arm of a vehicle, wherein it comprises a wiper arm device destined to be connected to a wiper arm and a wiper blade device as previously described, destined to be connected to a wiper blade.

The spray nozzles may be arranged on a side of the front end of the assembled wiper device.

Further advantages, features and details of the invention will be apparent from the following description of preferred example embodiments and with the aid of the drawings, showing in:
- Figure 1, a perspective rear view of a disassembled wiper device according a first embodiment,
- Figure 2, a perspective view of an adapter of the wiper blade device, having a main body and a protrusion in a disassembled state,
- Figure 3a, a perspective side view of the wiper device of Figure 1, the wiper blade device being assembled and the wiper arm device being plumb with the wiper blade device,
- Figure 3b, a step of the wiper device mounting following the step shown on Figure 3a, wherein the wiper arm device and the wiper blade device have been moved towards each other in a vertical direction,
- Figure 3c, a step of the wiper device mounting following the step shown on Figure 3b, wherein the wiper arm device and the wiper blade device have been moved towards each other in the wiper blade longitudinal direction,
- Figure 4, a section in the direction of the plane A-A of Figure 3c,
- Figure 5a, a perspective side view of the adapter, the body of which being seen by transparency,
- Figure 5b, a similar view of the adapter of Figure 5a, in a top view,
- Figure 5c, a similar view of the adapter of Figure 5a, in a rear view,
- Figure 6, a top view of the adapter according to a second embodiment, the body of which being seen by transparency,
- Figure 7, a top view of the adapter according to a third embodiment, the body of which being seen by transparency,
- Figure 8a, a perspective side view of a wiper device according the third embodiment, the wiper arm device being plumb with the wiper blade device,
- Figure 8b, a step of the wiper device mounting following the step shown on Figure 8a, wherein the wiper arm device and the wiper blade device have been moved towards each other in a vertical direction, and
- Figure 8c, a step of the wiper device mounting following the step shown on Figure 8b, wherein the wiper arm device and the wiper blade device have been moved towards each other in the wiper blade longitudinal direction,

Identical components or respectively components with the same function are provided with the same reference numbers in the figures.

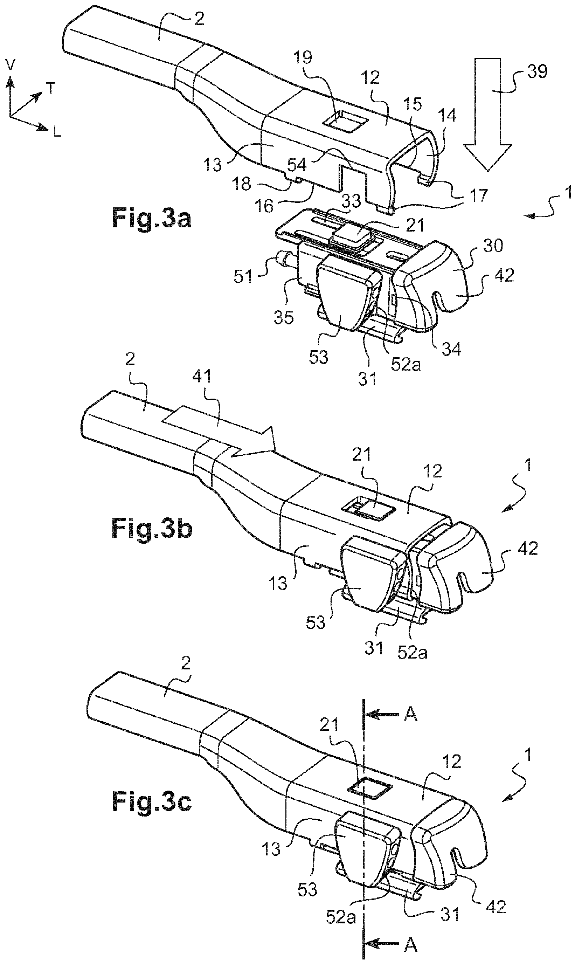

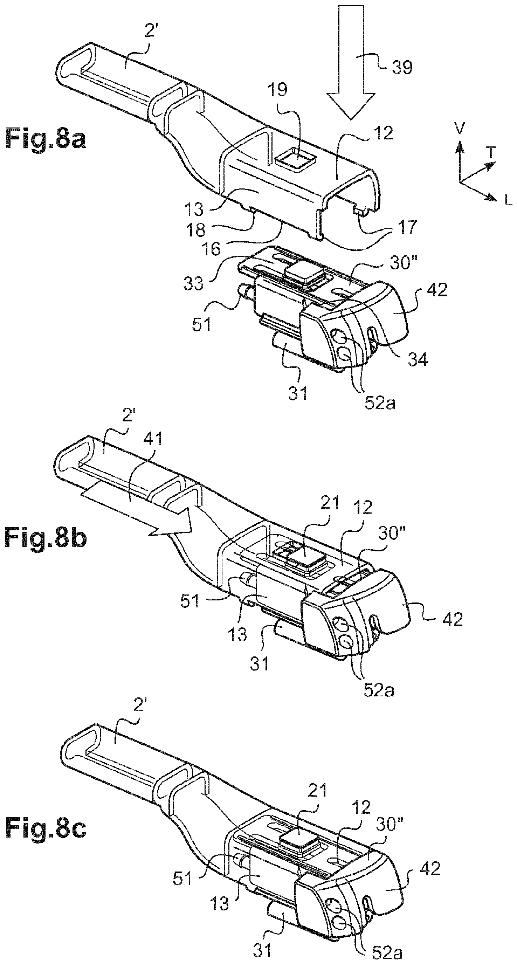

In the description, will be adopted without limitation to the longitudinal, vertical and transverse directions as shown in figures by the system (L, V, T) fixed relative to the wiper device 1. The longitudinal direction L corresponds to the main direction of the wiper blade. As the wiper device is shown, the horizontal plane corresponds to the plane (L, T). Directions "up" and "down" are designated with reference to the orientation of the wiper device in Figures 3a, 8a. Direction "front" is designated with reference to the free end side of the wiper arm.

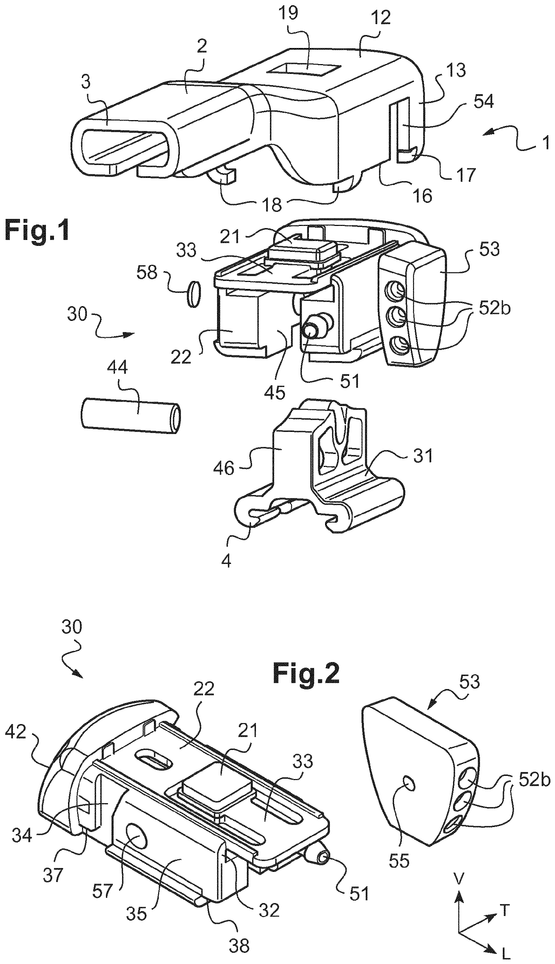

Figures 1, 2, 3a, 3b, 3c, 4, 5a, 5b and 5c show a first embodiment of a wiper device 1 for connecting a wiper blade (not shown) to a wiper arm (not shown) of a vehicle.

As it can be seen on Figure 1, the wiper device 1 comprises a wiper arm device 2 comprising an arm connector 3 destined to be mechanically connected to a wiper arm, and a wiper blade device destined to be mechanically connected to a wiper blade.

The wiper blade device comprises an adapter 30 configured to be mechanically connected to the wiper arm device 2 on the wiper arm side, and a blade connector 31 configured to be mechanically connected to the wiper blade, on the wiper blade side, for example by means of clips 4.

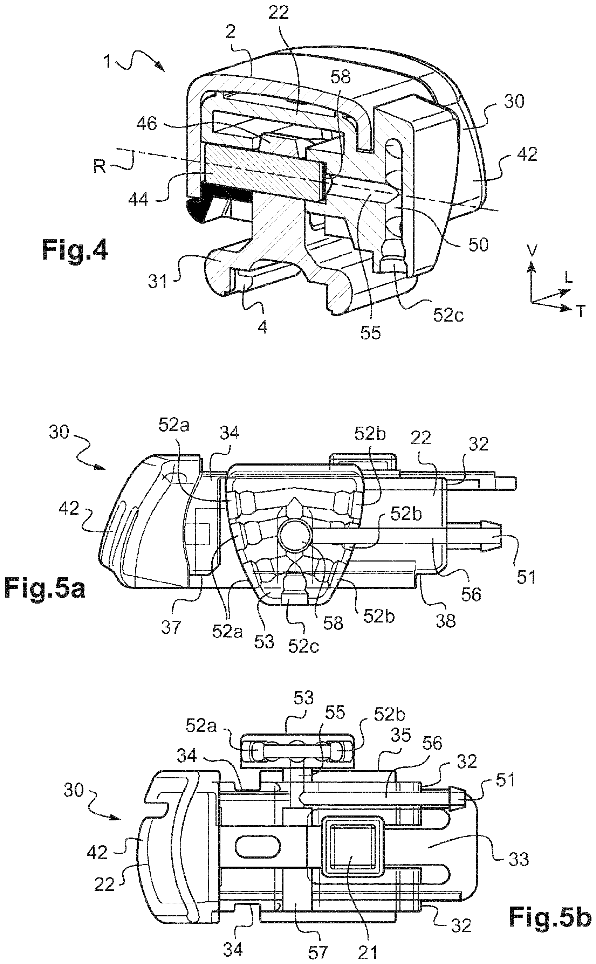

The adapter 30 and the blade connector 31 are arranged pivotably with respect to each other in a rotation axis R perpendicular to the longitudinal direction L of the wiper blade (Figure 4). The rotation axis R may comprise a pivot pin 44 around which the adapter 30 and the blade connector 31 are arranged pivotably.

Better shown in figures 3a, 3b, 3c, the adapter 30 is configured to cooperate with complementary connecting elements of the wiper arm device 2 to connect the wiper arm device 2 with the wiper blade device after two movements of the wiper blade device 2 perpendicularly with respect to each other.

In more detail, the wiper arm device 2 has a U-shaped cross-section on the side facing the wiper blade. The wiper arm device 2 has a rectangular base section 12 in the connecting region with the wiper blade device, on the opposite side of the arm connector 3. Side walls 13, 14 project from the base section 12 which are bent at right-angles in the direction of the wiper blade. In the illustrated example embodiment, the complementary connecting elements of the wiper arm device 2 comprise at least two connecting lugs 17, such as four lugs 17, 18 in the example, arranged on each side wall 13, 14 of the wiper arm device 2 having a U-shaped cross-section in the connecting region.

The connecting lugs 17, 18 may be integrally formed in one piece on the lower boundary edges 15, 16 of the side sections 13, 14, facing away from the base section 12. Whereas the ones connecting lugs 17 are aligned with the end or respectively the front face of the wiper arm device 2, the others connecting lugs 18 are arranged in longitudinal direction of the wiper arm device 2 spaced apart from the connecting lugs 17. The connecting lugs 17, 18 are bent around inwards at right-angles facing each others and in the example embodiment have a rectangular cross-section. In the base section 12 of wiper arm device 2, a rectangular cut-out is constructed in the form of an aperture 19. The aperture 19 cooperates with a detent button 21 of the adapter 30 of the wiper blade device.

The connection of the wiper blade device with the wiper arm device takes place via the adapter 30 on the wiper arm side, which cooperates with the wiper arm device 2 in a form- fitting and force-fitting manner. For this, the wiper device 1 is made of plastic, or respectively the adapter 30 has an elastic section 33, which can be seen in figure 2, at the free end of which the detent button 21 is arranged. In the position of the wiper blade device connected with the wiper arm device 2, the detent button 21 engages into the aperture 19 on the wiper arm device 2 in a form-fitting manner and positions the wiper arm device 2 in the wiper blade longitudinal direction L.

As it can be seen in figures 1, 2 and 4, the adapter 30 comprises a main body 22 extending in the longitudinal axis L of the wiper blade. A cavity 45 arranged in the main body 22 is able to receive a corresponding bump 46 of the blade connector 31. The pivot pin 44 is passing through the cavity 45, the main body 22 and the bump 46 to enable the relative rotation between the adapter 30 and the blade connector 31.

The adapter 30 comprises complementary slots 34 or boundaries 32 (instead of longitudinal slots 34, corresponding grooves could also be provided), extending in the vertical direction V, perpendicularly to the longitudinal direction L, and notches 37, 38 extending in the longitudinal direction L, at the ends of the slots 34 or boundaries 32. The slots 34 or boundaries 32 are arranged on the side walls 35 of the main body 22 of the adapter 30 and notches 37, 38 are arranged at the lower boundary edges of the side walls 35.

The connecting lugs 17, 18 of the wiper arm device 2 are able to cooperate with the complementary slots 34 or boundaries 32 and notches 37, 38 to connect the wiper arm device 2 with the wiper blade device after two movements of the wiper blade device 2 perpendicularly with respect to each other.

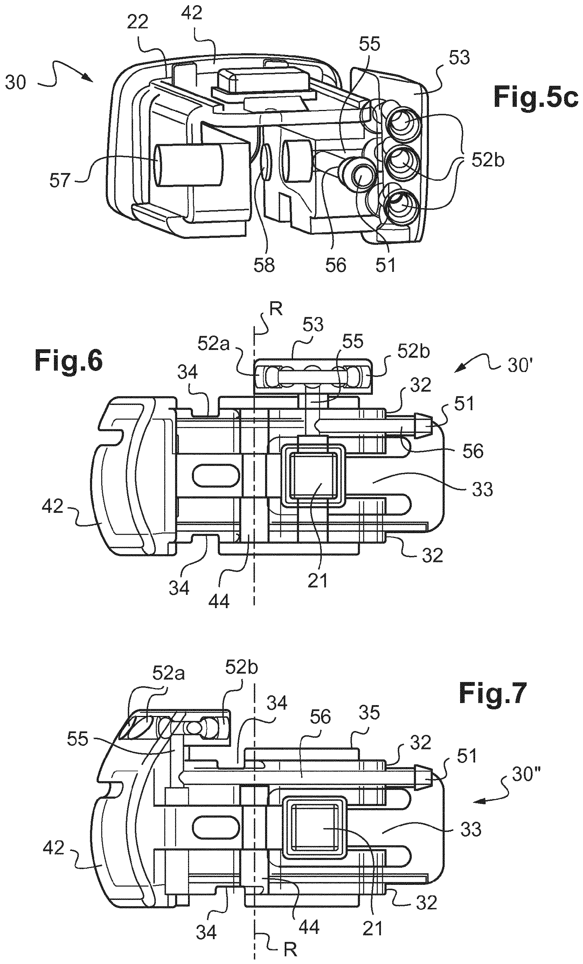

A fluid channel 50 is arranged into the adapter 30 (figures 4, 5a, 5b, 5c).

The fluid channel 50 has an inlet 51 destined to be plugged-in a water hose connected to a supply line of washing fluid which is guided along the wiper arm on the vehicle side, and ends by at least one spray nozzle 52a, 52b, 52c enabling the spraying of the washing fluid.

The plug-in can be done in a very simple way by hand.

The at least one spray nozzle 52a, 52b, 52c, may be arranged on a protrusion 53 of the adapter 30, arranged on a side wall 35 of the main body 22 of the first part adapter 30. The protrusion 53 is for example linked to the side wall 35 by means of a thin bridge and a complementary aperture 54 is arranged on the corresponding side wall 13 of the wiper arm device 2, allowing the passage of the bridge and the assembly of the adapter 30 with the wiper arm device 2. The protrusion 53, the bridge and the main body 22 can be integrally formed in one piece or made in distinct elements assembled for example by clipping (a form-fit connection), glue, ultrasonics, screws or warm caulking.

At least one spray nozzle 52a may be arranged in the front of the protrusion 53 while at least one other spray nozzle 52b is arranged in the backside of the protrusion 53. This enables the spray of washing fluid in front and back direction of the longitudinal direction L.

For example and as it can be better seen on figure 5a, three spray nozzles 52a may be arranged in front side and three other spray nozzles 52b are arranged backside. A supplementary spray nozzle 52c may also be arranged downwardly, enabling spraying washing fluid in the direction of the wiper blade. The front and back spray nozzles 52a, 52b can be superimposed and oriented towards the wiper blade with different inclination angles in order to increase the length which can be sprayed.

The fluid channel 50 may comprise an intermediate fluid portion 55 and an inlet fluid portion 56, which are, for example, perpendicular with respect to each other. The fluid channel 50 may comprise cylindrical channels.

The inlet fluid portion 56 communicates between the inlet 51 and the intermediate fluid portion 55. The inlet fluid portion 56 extends to a direction parallel to the longitudinal direction L of the wiper blade.

The intermediate fluid portion 55 extends in a direction parallel to the rotation axis R and crosses the bridge of the adapter 30 to connect the spray nozzles 52a, 52b, 52c of the protrusion 53 with the inlet fluid portion 56.

In a first embodiment, the intermediate fluid portion 55 extends in a direction aligned with the rotation axis R. In other words, the pivot pin 44 is coaxial with the cylindrical intermediate fluid portion 55. The protrusion 53 can thus be well centered on the side wall 35 of the main body 22 of the first part adapter 30.

A hole 57, for example a drilled hole, is made in the adapter 30, to form the intermediate fluid portion 55 and to receive the pivot pin 44. The hole 57 may be made after the assembly of the distinct elements when made by distinct elements. The adapter 30 may also comprise watertight seals (not shown) inserted between the distinct elements.

The wiper device 1 may further comprise a closure element 58 inserted between the fluid channel 50 and the pivot pin 44 to close the fluid channel 50. The closure element 58 may be made for example by a disc or a ball. It can be fixed in the fluid channel 50 for example by glue or ultrasonics.

Thus, the wiper blade device allows connecting the wiper blade to the wiper arm and providing a spraying function. The spraying function inserted in the adapter is thus well integrated near the rotation axis. This allows providing a compact wiper device while spraying the washing fluid directly on the surface that is swept by the wiper blade. Moreover, this connection does not prevent the bayonet closure by connecting lugs into slots of the wiper blade device. The compact wiper device is therefore also easy to assemble and disassemble.

According to a second embodiment represented on figure 6, the intermediate fluid portion 55 is arranged between the rotation axis R and a rear end of the adapter 30'. The intermediate fluid portion 55 is parallel to the rotation axis R and crosses the bridge of the adapter 30' to make in communication the spray nozzles 52a, 52b, 52c of the protrusion 53 with the inlet fluid portion 56.

According to a third embodiment represented on figures 7, 8a, 8b and 8c, the intermediate fluid portion 55 is arranged between the rotation axis R and a front cover 42 of the adapter 30".

In this embodiment, the spray nozzles 52a, 52b, 52c may be arranged on a side of the front cover 42 of the main body 22 of the first part adapter 30". Therefore, once assembled, the spray nozzles 52a are arranged on a side of the front end of the wiper device 1.

The spray nozzles 52a, 52b may be superimposed.

With this arrangement, the wiper arm device 2' doesn't need to have complementary aperture 54 arranged on the side wall for assembling the adapter 30".

As it can be seen on figures 8a, 8b and 8c, the assembly steps can be the same as with the first and second embodiments shown on figures 3a, 3b and 3c.

In accordance with figure 3a and 8a, the wiper blade device is positioned to the wiper arm device 2; 2' such that the connecting lugs 17 are aligned with the longitudinal slots 34 and with the boundaries 32. Subsequently, the wiper arm device 2; 2' and the wiper blade device are moved towards each other in accordance with figure 3b; 8b in the direction of the arrow 39, so that the connecting lugs 17 engage into the longitudinal slots 34, whereas the other connecting lugs 18 slide along the boundaries 32 of the side walls 35.

When the connecting lugs 17, 18 are arranged at the height of the notches 37, 38, and the base section 12 of the connecting region lies on the upper side of the adapter 30'; 30", the wiper blade device can be moved in the longitudinal direction L (arrow 41), i.e. sliding perpendicularly to the movement of introduction of the connecting lugs 17, 18 in the direction of the arrow 39, so that the connecting lugs 17, 18 arrive into the region of the notches 37, 38 and cooperate therewith, wherein the notches 37, 38 act as axial stops for the connecting lugs 17, 18. In the end position of the wiper blade device on the wiper arm device 2; 2', the detent button 21 engages into the aperture 19 of the wiper arm device 2; 2' and positions the wiper blade.

In addition, the base section 12 and the side sections 13, 14 are arranged on the one front face of the wiper arm device 2; 2' in abutting contact with a front cover 42 of the adapter 30.

To release the wiper blade from the wiper arm, the described mounting steps take place in reverse order.

## Claims

1. Wiper blade device for connecting a wiper blade to a wiper arm of a vehicle, comprising an adapter (30; 30'; 30") configured to be connected to a wiper arm and a blade connector (31) configured to be connected to a wiper blade, said adapter (30; 30'; 30") and blade connector (31) being arranged pivotably with respect to each other in a rotation axis (R) destined to be perpendicular to the longitudinal direction (L) of the wiper blade, a fluid channel (50) being arranged into the adapter (30; 30'; 30"), the fluid channel (50) having an inlet (51) destined to be plugged-in a water hose and ending by at least one spray nozzle (52a, 52b, 52c) enabling the spraying of a washing fluid, wherein the fluid channel (50) comprises an intermediate fluid portion (55) which extends in a direction parallel to the rotation axis (R), **characterized in that** the adapter (30; 30'; 30") is configured to cooperate with complementary connecting elements of the wiper arm device (2; 2') to connect the wiper arm device (2; 2') with the wiper blade device after two movements of the wiper blade device perpendicularly with respect to each other.

2. Wiper blade device according to claim 1, wherein the rotation axis (R) comprises a pivot pin (44) around which the adapter (30; 30'; 30") and the blade connector (31) are arranged pivotably.

3. Wiper blade device according to one of claim 1 or 2, wherein the at least one spray nozzle (52a, 52b, 52c) is arranged on a protrusion (53) of the adapter (30; 30'), arranged on the side wall (35) of a main body (22) of the adapter (30; 30').

4. Wiper blade device according to one of claims 1 to 3, wherein the fluid channel (50) comprises an intermediate fluid portion (55) which extends in a direction aligned with the rotation axis (R) or coaxial with the pivot pin (44).

5. Wiper blade device according to claim 4, wherein it comprises a closure element (58) inserted between the fluid channel (50) and the pivot pin (44).

6. Wiper blade device according to one of claims 1 to 3, wherein the fluid channel (50) comprises an intermediate fluid portion (55) which is arranged between the rotation axis (R) and a front cover (42) of the adapter (30").

7. Wiper blade device according to claim 6, wherein the at least one spray nozzle (52a, 52b, 52c) is arranged in the front cover (42).

8. Wiper blade device according to one of claims 1 to 7 , wherein the fluid channel (50) comprises an inlet fluid portion (56) communicating between the inlet (51) and the intermediate fluid portion (55) which is destined to be arranged in parallel with the longitudinal direction (L) of the wiper blade.

9. Wiper blade device according to claims 1 to 8 wherein :
- the complementary connecting elements of the wiper arm device comprise at least two connecting lugs (17, 18) arranged on each side wall (13, 14) of the wiper arm device (2; 2'), and
- the adapter (30; 30'; 30") comprises complementary slots (34) or boundaries (32) extending perpendicularly to the longitudinal direction (L), and notches (37, 38) extending in the longitudinal direction (L) at an end of the slots (34) or boundaries (32), the connecting lugs (17, 18) being able to cooperate with the complementary slots (34) or boundaries (32) and notches (37, 38) to connect the wiper arm device (2; 2') with the wiper blade device after two movements of the wiper blade device perpendicularly with respect to each other.

10. Wiper device (1) for connecting a wiper blade to a wiper arm of a vehicle, wherein it comprises a wiper arm device (2; 2') destined to be connected to a wiper arm and a wiper blade device according to one claim 1 to 9, destined to be connected to a wiper blade.

11. Wiper device according to claim 10, wherein the spray nozzles (52a) are arranged on a side of the front end of the assembled wiper device (1).

## Patentansprüche

1. Wischerblattvorrichtung zum Verbinden eines Wischerblatts mit einem Wischerarm eines Fahrzeugs, umfassend einen Adapter (30; 30'; 30''), der so ausgebildet ist, dass er mit einem Wischerarm verbunden ist, und ein Blattverbindungsstück (31), das so ausgebildet ist, dass es mit einem Wischerblatt verbunden ist, wobei der Adapter (30; 30'; 30'') und das Blattverbindungsstück (31) in einer Drehachse (R), für die vorgesehen ist, dass sie senkrecht zur Längsrichtung (L) des Wischerblatts steht, schwenkbar zueinander angeordnet sind, wobei in dem Adapter (30; 30'; 30'') ein Flüssigkeitskanal (50) angeordnet ist, wobei der Flüssigkeitskanal (50) einen Einlass (51) aufweist, für den vorgesehen ist, dass er in einen Wasserschlauch gesteckt wird, und durch mindestens eine Spritzdüse (52a, 52b, 52c), die das Spritzen einer Waschflüssigkeit ermöglicht, endet, wobei der Flüssigkeitskanal (50) einen Zwischenflüssigkeitsabschnitt (55), der sich in einer zur Drehachse (R) parallelen Richtung erstreckt, umfasst, **dadurch gekennzeichnet, dass** der Adapter (30; 30'; 30'') so ausgebildet ist, dass er mit komplementären Verbindungselementen der Wischerarmvorrichtung (2; 2') zum Verbinden der Wischerarmvorrichtung (2; 2') mit der Wischerblattvorrichtung nach zwei zueinander senkrechten Bewegungen der Wischerblattvorrichtung zusammenwirkt.

2. Wischerblattvorrichtung nach Anspruch 1, wobei die Drehachse (R) einen Gelenkbolzen (44), um den der Adapter (30; 30'; 30'') und das Blattverbindungsstück (31) schwenkbar angeordnet sind, umfasst.

3. Wischerblattvorrichtung nach Anspruch 1 oder 2, wobei die mindestens eine Spritzdüse (52a, 52b, 52c) auf einem vorstehenden Teil (53) des Adapters (30; 30') angeordnet ist, das auf der Seitenwand (35) eines Hauptkörpers (22) des Adapters (30; 30') angeordnet ist.

4. Wischerblattvorrichtung nach einem der Ansprüche 1 bis 3, wobei der Flüssigkeitskanal (50) einen Zwischenflüssigkeitsabschnitt (55), der sich in einer an der Drehachse (R) ausgerichteten oder zum Gelenkbolzen (44) koaxialen Richtung erstreckt, umfasst.

5. Wischerblattvorrichtung nach Anspruch 4, wobei sie ein zwischen den Flüssigkeitskanal (50) und den Gelenkbolzen (44) eingefügtes Verschlusselement (58) umfasst.

6. Wischerblattvorrichtung nach einem der Ansprüche 1 bis 3, wobei der Flüssigkeitskanal (50) einen Zwischenflüssigkeitsabschnitt (55), der zwischen der Drehachse (R) und einer vorderen Abdeckung (42) des Adapters (30'') angeordnet ist, umfasst.

7. Wischerblattvorrichtung nach Anspruch 6, wobei die mindestens eine Spritzdüse (52a, 52b, 52c) in der vorderen Abdeckung (42) angeordnet ist.

8. Wischerblattvorrichtung nach einem der Ansprüche 1 bis 7, wobei der Flüssigkeitskanal (50) einen zwischen dem Einlass (51) und dem Zwischenflüssigkeitsabschnitt (55) kommunizierenden Einlassflüssigkeitsabschnitt (56), für den vorgesehen ist, dass er parallel zur Längsrichtung (L) des Wischerblatts angeordnet ist, umfasst.

9. Wischerblattvorrichtung nach den Ansprüchen 1 bis 8, wobei:
- die komplementären Verbindungselemente der Wischerarmvorrichtung mindestens zwei Verbindungslaschen (17, 18), die auf jeder Seitenwand (13, 14) der Wischerarmvorrichtung (2; 2') angeordnet sind, umfassen und
- der Adapter (30; 30'; 30'') komplementäre Schlitze (34) oder Begrenzungen (32), die sich senkrecht zur Längsrichtung (L) erstrecken, und Ausklinkungen (37, 38), die sich an einem Ende der Schlitze (34) bzw. der Begrenzungen (32) in der Längsrichtung (L) erstrecken, umfasst, wobei die Verbindungslaschen (17, 18) dazu fähig sind, mit den komplementären Schlitzen (34) bzw. den Begrenzungen (32) und den Ausklinkungen (37, 38) zum Verbinden der Wischerarmvorrichtung (2; 2') mit der Wischerblattvorrichtung nach zwei zueinander senkrechten Bewegungen der Wischerblattvorrichtung zusammenzuwirken.

10. Wischervorrichtung (1) zum Verbinden eines Wischerblatts mit einem Wischerarm eines Fahrzeugs, wobei sie eine Wischerarmvorrichtung (2; 2'), für die vorgesehen ist, dass sie mit einem Wischerarm verbunden ist, und eine Wischerblattvorrichtung nach einem der Ansprüche 1 bis 9, für die vorgesehen ist, dass sie mit einem Wischerblatt verbunden ist, umfasst.

11. Wischervorrichtung nach Anspruch 10, wobei die Spritzdüsen (52a) auf einer Seite des vorderen Endes der zusammengebauten Wischervorrichtung (1) angeordnet sind.

## Revendications

1. Dispositif de lame d'essuie-glace pour relier une lame d'essuie-glace à un bras d'essuie-glace d'un véhicule, comprenant un adaptateur (30 ; 30' ; 30") conçu pour être relié à un bras d'essuie-glace et un raccord de lame (31) conçu pour être relié à une lame d'essuie-glace, lesdits adaptateur (30 ; 30' ; 30") et raccord de lame (31) étant disposés de manière pivotante l'un par rapport à l'autre dans un axe de rotation (R) destiné à être perpendiculaire à la direction longitudinale (L) de la lame d'essuie-glace, un canal de fluide (50) étant disposé dans l'adaptateur (30 ; 30' ; 30"), le canal de fluide (50) ayant une entrée (51) destinée à être branchée à un tuyau d'eau et se terminant par au moins une buse de pulvérisation (52a, 52b, 52c) permettant la pulvérisation d'un liquide de lavage, le canal de fluide (50) comprenant une partie de fluide intermédiaire (55) qui s'étend dans une direction parallèle à l'axe de rotation (R), **caractérisé en ce que** l'adaptateur (30 ; 30' ; 30") est conçu pour coopérer avec des éléments de liaison complémentaires du dispositif de bras d'essuie-glace (2 ; 2') pour relier le dispositif de bras d'essuie-glace (2 ; 2') au dispositif de lame d'essuie-glace après deux mouvements du dispositif de lame d'essuie-glace perpendiculairement l'un par rapport à l'autre.

2. Dispositif de lame d'essuie-glace selon la revendication 1, l'axe de rotation (R) comprenant un tourillon (44) autour duquel l'adaptateur (30 ; 30' ; 30") et le raccord de lame (31) sont disposés de manière pivotante.

3. Dispositif de lame d'essuie-glace selon la revendication 1 ou 2, l'au moins une buse de pulvérisation (52a, 52b, 52c) étant disposée sur une saillie (53) de l'adaptateur (30 ; 30'), disposée sur la paroi latérale (35) d'un corps principal (22) de l'adaptateur (30 ; 30').

4. Dispositif de lame d'essuie-glace selon l'une des revendications 1 à 3, le canal de fluide (50) comprenant une partie de fluide intermédiaire (55) qui s'étend dans une direction alignée avec l'axe de rotation (R) ou coaxiale avec le tourillon (44).

5. Dispositif de lame d'essuie-glace selon la revendication 4, comprenant un élément de fermeture (58) inséré entre le canal de fluide (50) et le tourillon (44).

6. Dispositif de lame d'essuie-glace selon l'une des revendications 1 à 3, le canal de fluide (50) comprenant une partie de fluide intermédiaire (55) qui est disposée entre l'axe de rotation (R) et un couvercle avant (42) de l'adaptateur (30'').

7. Dispositif de lame d'essuie-glace selon la revendication 6, l'au moins une buse de pulvérisation (52a, 52b, 52c) étant disposée dans le couvercle avant (42) .

8. Dispositif de lame d'essuie-glace selon l'une des revendications 1 à 7, le canal de fluide (50) comprenant une partie de fluide d'entrée (56) communiquant entre l'entrée (51) et la partie de fluide intermédiaire (55) qui est destinée à être disposée parallèlement à la direction longitudinale (L) de la lame d'essuie-glace.

9. Dispositif de lame d'essuie-glace selon les revendications 1 à 8,
les éléments de liaison complémentaires du dispositif de bras d'essuie-glace comprenant au moins deux pattes de liaison (17, 18) disposées sur chaque paroi latérale (13, 14) du dispositif de bras d'essuie-glace (2 ; 2'), et
l'adaptateur (30 ; 30' ; 30") comprenant des fentes (34) ou limites (32) complémentaires s'étendant perpendiculairement à la direction longitudinale (L), et des encoches (37, 38) s'étendant dans la direction longitudinale (L) au niveau d'une extrémité des fentes (34) ou limites (32), les pattes de liaison (17, 18) pouvant coopérer avec les fentes (34) ou limites (32) complémentaires et les encoches (37, 38) pour relier le dispositif de bras d'essuie-glace (2 ; 2') au dispositif de lame d'essuie-glace après deux mouvements du dispositif de lame d'essuie-glace perpendiculairement l'un par rapport à l'autre.

10. Dispositif d'essuie-glace (1) pour relier une lame d'essuie-glace à un bras d'essuie-glace d'un véhicule, comprenant un dispositif de bras d'essuie-glace (2 ; 2') destiné à être relié à un bras d'essuie-glace et à un dispositif de lame d'essuie-glace selon une revendication 1 à 9, destiné à être relié à une lame d'essuie-glace.

11. Dispositif d'essuie-glace selon la revendication 10, les buses de pulvérisation (52a) étant disposées sur un côté de l'extrémité avant du dispositif d'essuie-glace (1) assemblé.
